(19) Europäisches Patentamt

European Patent Office

Office européen des brevets

(11) **EP 1 085 823 B1**

(12) **FASCICULE DE BREVET EUROPEEN**

(45) Date de publication et mention
de la délivrance du brevet:
**25.10.2006  Bulletin 2006/43**

(51) Int Cl.:
***A23L 1/182*** *(2006.01)*  ***A23L 1/10*** *(2006.01)*

(21) Numéro de dépôt: **99925090.5**

(86) Numéro de dépôt international:
**PCT/FR1999/001419**

(22) Date de dépôt: **15.06.1999**

(87) Numéro de publication internationale:
**WO 1999/065332 (23.12.1999 Gazette 1999/51)**

(54) **PROCEDE D'ETUVAGE DE RIZ ET LOT DE RIZ ETUVE**

VERFAHREN ZUM HERSTELLEN VON PARBOILED REIS UND CHARGE VON PARBOILED REIS

METHOD FOR PARBOILING RICE AND BATCH OF PARBOILED RICE

(84) Etats contractants désignés:
**AT BE CH DE DK ES FI FR GB GR IE IT LI LU NL
PT SE**

(30) Priorité:  **17.06.1998  FR 9807627**

(43) Date de publication de la demande:
**28.03.2001  Bulletin 2001/13**

(73) Titulaire: **Lustucru Riz
69006 Lyon (FR)**

(72) Inventeurs:
• **MINIER, Chantal
F-13400 Aubagne (FR)**
• **AREKION, Isabelle
F-13013 Marseille (FR)**

• **LEPEZ, Olivier
F-95270 Viarmes (FR)**

(74) Mandataire: **Eidelsberg, Victor Albert
Cabinet Flechner
22, Avenue de Friedland
75008 Paris (FR)**

(56) Documents cités:
**CH-A- 344 292          GB-A- 2 298 122**

Remarques:
Le dossier contient des informations techniques
présentées postérieurement au dépôt de la demande
et ne figurant pas dans le présent fascicule.

**Description**

La présente invention concerne les procédés d'étuvage du riz et le riz étuvé.

On connaît déjà une installation pour l'étuvage du riz comprenant un dispositif pour exécuter un trempage, une colonne dans laquelle le riz est gélatinisé ayant implicitement une sortie et une entrée et un moyen de chauffage (vapeur d'eau)(CH-344 292A). Un moyen pour l'étuvage de céréales ayant les dispositifs susdits et un dispositif d'égouttage sont divulgués dans GB-A-2 298 122. Un procédé pour préparer un riz étuvé ayant une fissuration minimale est divulgué dans US-2,903,360 et dans US-A-5,316,783.

Le riz étuvé est un riz qui a subi un trempage, un traitement thermique, un séchage et souvent un usinage. Ce traitement permet notamment d'avoir un riz non collant et dont les grains sont intacts, mais avec l'inconvénient que la durée de cuisson est plus longue.

L'invention pallie cet inconvénient par un procédé d'étuvage du riz, tant paddy que cargo, qui permet d'obtenir du riz étuvé dont la durée de cuisson est très écourtée.

Le procédé suivant l'invention consiste à tremper le riz dans de l'eau à une température inférieure à 70°C dans des conditions et pendant une durée telles que l'on obtienne, après enlèvement de l'eau superficielle par égouttage ou essorage, du riz trempé ayant une teneur pondérale en humidité supérieure à 31 %. On effectue ensuite une gélatinisation du riz trempé en le portant à une température supérieure à 130°C, tout en en maintenant l'humidité à une teneur pondérale supérieure à 20 % pendant une durée suffisante pour obtenir du riz gélatinisé à coeur. Suivant l'invention, on effectue la gélatinisation en faisant passer le riz trempé en continu dans une enceinte, de manière à limiter, par l'équilibre qui s'instaure dans l'enceinte entre la teneur en humidité du riz qui subit la gélatinisation et la teneur en humidité de l'atmosphère gazeuse de l'enceinte, la quantité de vapeur qui se dégage du riz pendant la gélatinisation pour maintenir l'humidité pondérale du riz en cours de gélatinisation à une valeur supérieure à 20% et en chauffant le riz trempé dans l'enceinte essentiellement par conduction, de manière à ne pas augmenter sensiblement la teneur pondérale en humidité du riz gélatinisé, et notamment à ne pas dépasser une teneur de 28 %.

En opérant de cette façon, on évite deux écueils. Si on chauffe le riz par un courant d'air chaud, il se produit nécessairement un séchage qui en diminue la teneur en humidité très rapidement, ce qui entraîne une fissuration des grains de riz. De plus, un traitement par un courant d'air chaud, en raison de sa nécessaire brièveté si l'on ne veut pas griller le grain, est très peu homogène, parce que, en raison de la rapidité du dégagement de l'eau, certains grains n'en ont plus assez pour que la gélatinisation de l'amidon ait lieu correctement. Si, en revanche, on effectue la gélatinisation par un traitement à la vapeur sous pression, la teneur pondérale en humidité dépasse 28 % environ. On constate que cela renforce la texture du grain qui a moins de porosité. Le temps de cuisson est alors très grand. En confinant le riz dans une enceinte et en ie chauffant par conduction, et non par convection à l'aide d'un fluide chaud, notamment par contact avec l'enceinte métallique chauffée par passage de courant ou par une chemise externe dans laquelle passe du fluide caloporteur, on peut se rendre bien maître de la teneur en humidité du riz, alors qu'on en élève la température pour le gélatiniser.

On effectue le trempage en général pendant au moins trois heures à une température de 40 à 70°C, la durée pouvant être d'autant plus petite que la température est plus élevée. Le rapport du volume du riz à celui de l'eau est d'au moins 2,5. Le trempage peut s'effectuer dans une cuve ou une trémie. Le dispositif d'égouttage peut être un filtre vibrant qui assure la séparation de l'eau se trouvant en surface des grains de riz, représentant notamment de 2 à 3% en poids.

En général, on sèche le riz gélatinisé à une teneur pondérale en humidité de 11 à 13 % pour obtenir du riz marchand et, le cas échéant, on usine également le riz séché.

De préférence, la durée de passage ou temps de séjour du riz trempé dans l'enceinte est comprise entre quatre et dix minutes. Au-delà de dix minutes, il peut arriver que la teneur en humidité du riz diminue trop.

On peut faire en sorte qu'en régime stationnaire le riz occupe de 5 à 30% du volume de l'enceinte.

Pour empêcher que certains grains de riz ne restent continuellement au contact de l'enceinte chauffée et ne grillent, on préfère déplacer le riz dans l'enceinte en faisant vibrer l'enceinte, en sorte que ce ne sont jamais les mêmes grains de riz qui sont en contact avec l'enceinte.

L'invention vise aussi un procédé de préparation de riz qui consiste à l'étuver par le procédé suivant l'invention, à le refroidir à la température ambiante (15 à 30°C), tout en maintenant son humidité à plus de 19%, à usiner le riz refroidi, à le réchauffer au moins à 75-80°C, puis à aplatir le riz réchauffé, et à le sécher jusqu'à une humidité de 11 à 13%.

A la sortie du procédé d'étuvage, les grains sont transférés dans une colonne de séchage pour y être refroidis. Dans cette colonne le riz est traversé par un courant d'air à température ambiante. Ce riz est ainsi ramené à la température ambiante en perdant de 3 à 5 % d'humidité.

L'usinage est réalisé par passage successif dans 3 cônes d'usinage classiquement utilisés pour blanchir le riz.

Par exemple et le plus souvent, ces appareils se composent d'un tronc de cône métallique, revêtu d'une couche abrasive et tournant à l'intérieur d'une enceinte constituée d'une tôle perforée exactement de même forme, mais légèrement plus grande. Le riz est introduit entre le tronc de cône et la cage métallique, il se dispose en anneau en tournant avec le tronc de cône. Le blanchiment des grains résulte du frottement des grains contre la surface abrasive et aussi des grains les uns contre les autres. Pour réaliser un blanchiment complet, c'est-à-dire la mise à nu de l'albumen du grain, les grains de riz usinés sont immédiatement soumis au chauffage et à l'aplatissement.

L'humidité du riz à la sortie de l'usinage est comprise entre 17 et 20 % d'humidité. Si l'aplatissement des grains a lieu sans réchauffage préalable, par passage entre des rouleaux métalliques froids, on observe l'apparition de nombreuses brisures de grains abîmés dont une partie a été arrachée au cours de l'aplatissement. Il y a augmentation des brisures de 20% en poids dans le produit. Il y a seulement 25% des grains qui restent intacts, non déformés et sans partie manquante.

Le réchauffage des grains au dessus de leur température de gélatinisation, de 60° à 75°C selon les variétés, permet d'augmenter sensiblement leur plasticité par passage de la température de transition vitreuse de l'amidon. Ce chauffage doit s'effectuer sans modification de l'humidité des grains. Un chauffage à l'air chaud par exemple provoquerait une perte d'humidité rapide et une rigidification du grain avec formation de fissures importante et de brisures.

L'utilisation des infrarouge pour réchauffer les grains convient parfaitement, traités en mono-couche, les grains passent de 25° à 80°C en 20 secondes sans changement de leur humidité. Les grains ainsi réchauffés peuvent être aplatis sans formation de brisures et avec un taux de grains fissurés (fissures visibles à l'oeil nu) inférieur à 10% (nombre de grains fissurés/nombre de grains totaux).

L'aplatissement s'effectue par passage entre deux rouleaux métalliques par exemple les rouleaux utilisés pour floconner des céréales. L'écartement des rouleaux est réglé entre 0,2 et 0,5 mm préférentiellement entre 0.3 et 0.4 mm pour obtenir l'effet recherché sur les grains. La vitesse identique pour les deux rouleaux est réglée entre 20 et 60 t/mn, préférentiellement entre 30 et 50 t/mn.

Des grains de riz aplatis sont ensuite immédiatement transférés dans une colonne de séchage où ils sont traversés par un courant d'air à une température inférieure à 50°C. Ils sont ainsi progressivement ramené à une humidité de 11 à 13% pour être ensuite conditionnés.

On mesure l'épaisseur des grains de la manière suivante.

La coupe transversale du grain en son milieu fait apparaître une surface ovoïde.

L'épaisseur E prise en compte par la mesure est la plus petite section prise au milieu du grain.

Pratiquement, la mesure de l'épaisseur E est effectuée au pied à coulisse sur le milieu du grain vu de profil.

Après aplatissement et séchage final, l'épaisseur moyenne E de 100 grains pris au hasard est inférieure d'au moins 15% à l'épaisseur E du grain sec qui n'a pas été aplati. Préférentiellement l'aplatissement fera diminuer de 20 à 25% l'épaisseur du grain, étant entendu que E ne devra pas être inférieure à 0,9 mm, ni supérieure à 1,3 mm. En dessous de la valeur inférieure, les grains sont trop plats, ressemblent à des disques, et ne peuvent raisonnablement être qualifiés de grains de riz. Pour le consommateur non averti, ils rentrent dans la catégorie des flocons. On préfère que E soit comprise entre 1,1 et 1,2 mm.

Après aplatissement et séchage, le riz obtenu présente plus de 90% des grains non fissurés. Les grains fissurés sont qualifiés de riz clivés, ils présentent une ou plusieurs fractures bien visibles à l'oeil nu, toujours transversales et allant d'un côté à l'autre du grain. Elles résultent de trop fortes tensions à l'intérieur du grain générées par des différences trop importantes de température et/ou d'humidité entre l'intérieur et la périphérie des grains.

L'invention vise également une installation d'étuvage du riz, qui comprend successivement une cuve de trempage, un dispositif d'égouttage et une enceinte ayant une entrée et une sortie, des moyens de chauffage de l'enceinte et des moyens destinés à faire vibrer l'enceinte pour y faire passer le riz de l'entrée à la sortie.

L'installation en continu suivant l'invention permet de traiter de façon individualisée et homogène tous les grains et se comporte à la fois comme un échangeur thermique et un réacteur chimique gaz-solide divisé.

Les grains de riz vont, dès l'entrée dans l'enceinte, être individuellement chauffés par le contact avec la paroi chaude de l'enceinte. L'humidité contenue uniformément dans le grain va progressivement se transformer en vapeur à mesure que le grain s'échauffe. Le ciel de l'enceinte va dans ce même temps se charger en vapeur d'eau et maintenir une humidité autour du grain qui limite sa déshydratation et permet ainsi la gélatinisation complète de l'amidon.

Pour que le traitement s'opère de façon satisfaisante et que les grains soient complètement transformés, le temps de passage doit permettre l'élévation de température du grain jusqu'à 130°C.

Le temps de séjour des grains dans l'enceinte est régi par sa longueur et par la fréquence de vibration appliquée. On règle le temps de séjour comme indiqué ci-dessus pour obtenir un bon confinement des grains de riz dans l'enceinte, ce qui limite la perte en eau et maintient l'atmosphère de vapeur autour du grain.

L'invention vise également un lot de grains de riz étuvé et non fissuré qui se caractérise en ce qu'au moins 90 % des grains sont gélatinisés à coeur suivant le test à l'alcali et ont une fermeté inférieure à 62 au viscoélastographe Chopin après avoir été immergés dans de l'eau bouillante pendant huit minutes.

On constate en effet que les grains de riz étuvé suivant l'invention sont gélatinisés d'une manière bien homogène et que notamment 99 % des grains et même 100 % d'entre eux sont gélatinisés et cependant, d'une manière entièrement inattendue, le riz ainsi étuvé cuit très rapidement.

En outre, si l'on choisit comme grains de riz à traiter ceux qui ont une teneur pondérale en amylose par rapport à la matière sèche inférieure à 15 %, on constate qu'on peut cuire du riz étuvé suivant l'invention en 5 minutes. Les variétés de riz qui ont cette teneur en amylose sont notamment le Khao Dawk Mali (Thaïlande), le Miara (France) et le Hom Mali (Thaïlande).

On obtient également cette durée courte de cuisson avec du riz n'ayant pas cette teneur en amylose, si on le soumet au procédé décrit ci-dessus mettant en oeuvre une opération d'aplatissement.

Le test à l'alcali s'effectue comme suit.

100 grains de riz étuvés sont placés dans une solution de KOH à 1,7 % en poids pendant 20 heures.

Au bout des 20 heures de réaction, on observe la dégradation subie par les grains

- grains intacts : grains non gélatinisés
- grains dispersés en une masse crayeuse opaque : grains peu gélatinisés
- grains dispersés complètement translucides, sans coeur opaque crayeux : grains totalement gélatinisés.

Le viscoélastographe Chopin permet d'évaluer les caractéristiques *visco-élastiques* du riz cuit en appréciant sa déformation sous l'application d'une force constante de 700g pendant 20 secondes puis relâchement de la force pendant 40 secondes.

Pour la mesure au viscoélastographe, 100g de riz sont cuits dans un litre d'eau bouillante. A la fin de la cuisson, les grains sont égouttés pendant une minute sur un tamis d'ouverture 1,25 mm puis mis à refroidir pendant 15 minutes dans une boîte de Pétri de 60 mm placée sur une plaque éponge humide et recouverte par une boîte de Pétri de 80 mm de façon que cette dernière crée un joint étanche avec l'eau qui imbibe la plaque éponge. Trois grains ainsi refroidis sont ensuite placés sur le viscoélastographe. On note l'épaisseur E des grains avant application de la force et l'épaisseur $e_1$ après aplatissement. A partir de ces valeurs, on calcule la fermeté $F = 100.(e_1/E)$. Six mesures sont effectuées sur la même cuisson pour calculer la moyenne et l'écart-type sur les six résultats obtenus.

De plus, ces grains de riz étuvés suivant l'invention à teneur pondérale en amylose par rapport à la matière sèche inférieure à 15% ont la propriété suivante : les grains cuits, placés dans un récipient hermétiquement fermés et mis au réfrigérateur à 4°C pendant 6 jours ont une fermeté, mesurée au viscoélastographe, au plus égale à 120 % de celle qu'ils ont 15 minutes après la cuisson. Cette propriété est très recherchée notamment quand on doit préparer un mets à l'avance.

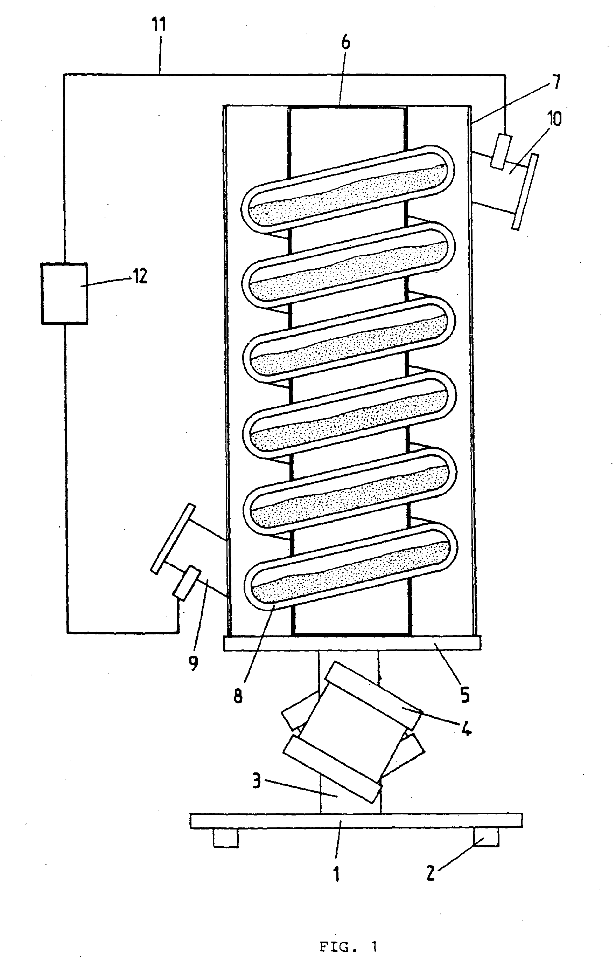

La figure 1 du dessin annexé illustre une partie de l'installation,
et
Les figures 2 et 3 illustrent deux installations.

Elle comporte un socle 1 monté sur plots amortisseurs 2. De ce socle part un montant 3 sur lequel sont montés des moteurs 4 à balourd qui font vibrer un plateau 5.

Sur ce plateau 5 est boulonné un fût 6 intérieur et coaxialement à celui-ci un fût 7. L'intervalle entre les fûts 6 et 7 est empli d'une matière isolante thermiquement et électriquement. Un serpentin 8 métallique est fixé autour du fût 6 et serpente d'une entrée 9 à une sortie 10. Les sorties 9 et 10 sont reliées par un circuit 11 électrique de chauffage à un générateur 12 de courant électrique. L'entrée 9 est alimentée à partir d'un filtre vibrant servant de dispositif d'égouttage, lui-même alimenté en riz humide par un tapis de convoyage en provenance d'une cuve de trempage.

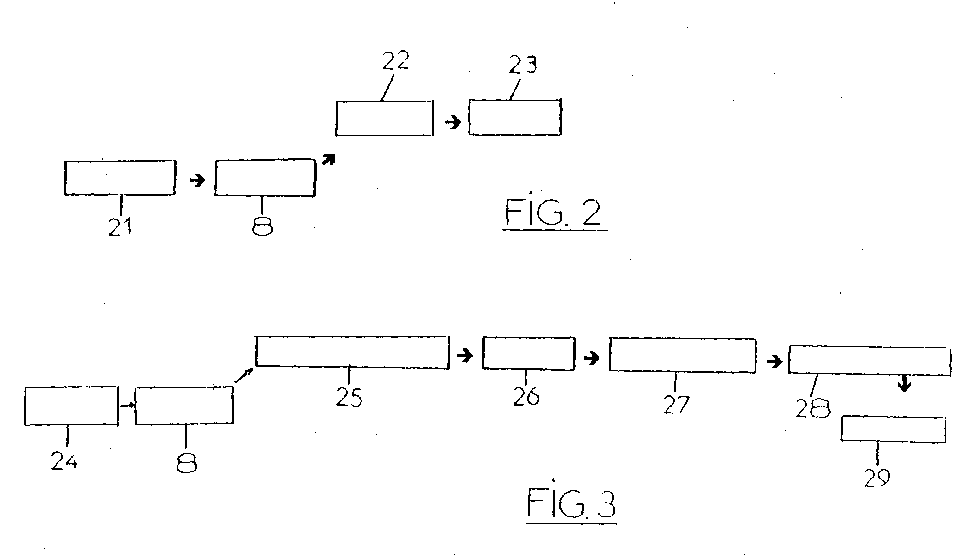

L'installation représentée à la figure 2 comprend successivement une cuve 21 de trempage, une enceinte 8 d'étuvage, un dispositif 22 de séchage et un dispositif 23 d'usinage.

Celle de la figure 3 comprend successivement une cuve 24 de trempage, une enceinte 8 d'étuvage, un dispositif 25 de refroidissement, un dispositif 26 d'usinage, un dispositif 27 de réchauffage, un dispositif 28 d'aplatissement et un dispositif 29 de séchage.

Les exemples suivants illustrent l'invention. Dans ces exemples, les parties et pourcentages sont exprimés en poids, sauf mention contraire expresse.

Exemple 1

1 à 600 kg de riz cargo Khao Dawk Mali sont placés dans une cuve et recouverts par 1500 litres d'eau à 65°C. Le riz est laissé en contact avec l'eau pendant 3 heures. L'eau de trempage est alors évacué et le riz est extrait gravitairement de la cuve et égoutté sur un filtre vibrant qui comprend un générateur de vibration, un tamis toile inox soudée sur un cadre inox et un système anticolmatant à anneaux en nylon. Son humidité est alors égale à 31,4 %. Il est ensuite convoyé par une vis doseuse pilotée par un variateur de fréquence à un débit de 100 à 600 kg/h (suivant divers essais qui ont tous donnés satisfaction) vers l'enceinte qui est constituée d'un serpentin de 64 m de longueur et de 110 mm de diamètre intérieur et dont les parois ont été préalablement chauffées à 190°C. Le riz est transporté de l'entrée vers la sortie de l'enceinte par vibration à une vitesse de 7 m/minute. Son temps de séjour est de 9 minutes et 9 secondes . Sa température atteinte à la sortie de l'enceinte est de 130°. Son humidité est de 25,5 %. Le cargo ainsi traité est ensuite transporté jusqu'à des colonnes de séchage à air chaud où son humidité est ramenée à 12,5 % pour sa conservation. Il est ensuite usiné selon le procédé traditionnel.

Le riz ainsi traité soumis au test à l'alcali présente 98 % de grains complètement translucides, c'est-à-dire complètement gélatinisés.

Sa densité est égale à 95 % de la densité du même grain usiné, mais non traité. Aucune fissure n'est visible à l'oeil ou à la loupe binoculaire.

Ce riz cuit pendant 5 minutes à l'eau bouillante et, refroidi pendant 15 minutes selon le protocole décrit ci-dessus, présente les caractéristiques de texture suivantes mesurées au viscoélastographe :

$$Fmoy = 59.0 - \text{écart-type sur 6 mesures} = 1.2$$

Exemple 2

600 kg de cargo Thaï-Bonnet sont traités selon le procédé décrit dans l'exemple 1. Le temps de séjour dans l'enceinte est ici de 9 minutes. Sa température atteinte à la sortie de l'enceinte est de 140°C. Son humidité est de 21,8%. Le riz ainsi traité soumis au test à l'alcali présente 95% de grains complètement translucides, c'est-à-dire complètement gélatinisés.

Sa densité est égale à 96% de la densité du même grain usiné mais non traité. Aucune fissure n'est visible à l'oeil ou à la loupe binoculaire.

Ce riz cuit pendant 8 minutes à l'eau bouillante et, refroidi pendant 15 minutes selon le protocole décrit ci-dessus, présente les caractéristiques de texture suivantes mesurées au viscoélastographe :

$$Fmoy = 59.5 - \text{écart-type sur 6 mesures} = 2.7$$

Exemple 3

600 kg de paddy Thaï-Bonnet sont traités selon le procédé décrit dans l'exemple 1. La durée de trempage est ici de 7 heures et la température de 68°C. La consigne de température pour l'enceinte est de 230°C. Le temps de séjour dans l'enceinte est de 8 minutes. La température du riz atteinte à la sortie de l'enceinte est de 155°C. Son humidité est de 22,1 %.

Le riz ainsi traité soumis au test à l'alcali présente 95 % de grains complètement translucides, c'est-à-dire complètement gélatinisés.

Sa densité est égale à 96% de la densité du même grain usiné, mais non traité. Aucune fissure n'est visible à l'oeil ou à la loupe binoculaire.

Ce riz cuit pendant 8 minutes à l'eau bouillante et, refroidi pendant 15 minutes selon le protocole décrit ci-dessus, présente les caractéristiques de texture suivantes mesurées au viscoélastographe :

$$Fmoy = 55.3 - \text{écart-type sur 6 mesures} = 4.3$$

Exemple comparatif 1

1 kg de cargo Thaï-Bonnet est trempé selon le procédé décrit dans l'exemple 1, puis après égouttage est soumis à un courant d'air chaud à 200°C pendant 20 secondes. L'humidité du riz traité est alors de 23%. Le riz est ensuite séché, puis usiné selon le procédé de l'exemple 1.

Ce riz ainsi traité et soumis au test à l'alcali présente 30% de grains encore opaques, c'est-à-dire seulement partiellement gélatinisés. De nombreux grains sont de plus fissurés.

Exemple comparatif 2

1 kg de cargo Thaï-Bonnet est trempé selon le procédé décrit dans l'exemple 1, puis après égouttage est soumis à un traitement à la vapeur sous pression de 2 bars pendant 20 secondes. Le riz est ensuite séché, puis usiné selon le procédé décrit dans l'exemple 1.

Ce riz cuit pendant 8 minutes à l'eau bouillante et, refroidi 15 minutes selon le protocole décrit ci-dessus,

présente les caractéristiques de texture suivantes mesurées au viscoélastographe :

$$Fmoy = 70.1 - \text{écart-type sur 6 mesures} = 0.7$$

Exempte 4 (n'est pas couvert par la revendication)

600 kg de cargo Thaï-Bonnet sont traités selon le procédé décrit dans l'exemple 2 jusqu'à la sortie de l'enceinte d'étuvage. Les grains sont ensuite transportés jusqu'à une colonne de séchage où il sont refroidis jusqu'à 25°C par un flux d'air ambiant. Le temps de séjour dans la colonne est de 15 mn, l'humidité du riz descend à 18%.

Le riz est alors usiné par passage successif dans 3 cônes d'usinage, qui génèrent entre 8 et 9,5% de farine basse et 4% de brisures.

Il est ensuite acheminé vers un tapis vibrant chauffé par des lampes infrarouges. La température des grains atteint 85°C en 20 secondes. L'humidité des grains est de 17,5%. Ce tapis sert également d'alimentation pour le passage entre les deux rouleaux métalliques qui vont réaliser l'aplatissement des grains. L'écartement des rouleaux est réglé à 0,35 mm, leur vitesse à 40 t/mn. A la sortie, les grains aplatis sont acheminés rapidement vers les colonnes de séchage où leur humidité est ramenée à 12,5%.

Le riz ainsi traité soumis au test à l'alcali présente 98% de grains complètement translucides, c'est-à-dire complètement gélatinisés.

Sa densité est égale à 94% de la densité du même riz usiné mais non traité. 4% des grains présentent des fissures visibles à l'oeil nu. L'épaisseur moyenne des grains est 1,2 mm soit une diminution de 23% par rapport à l'épaisseur des grains traités selon l'exemple 2. Le taux de brisures reste identique à celui déterminé après usinage soit 4%.

Ce riz cuit pendant 5 mm à l'eau bouillante et, refroidi pendant 15 mn selon le protocole décrit ci-dessus présente les caractéristiques de texture suivantes mesurées au viscoélastographe :

$$Fmoy = 61,4 - \text{écart-type sur 6 mesures} = 1,4$$

Exemple 5 (n'est pas couvert par la revendication)

600 kg de cargo Khao Dawk Mali sont traités selon le procédé décrit dans l'exemple 1 jusqu'à la sortie de l'enceinte d'étuvage. Les grains sont ensuite transportés jusqu'à une colonne de séchage où ils sont refroidis jusqu'à 25°C par un flux d'air ambiant. Le temps de séjour dans la colonne est de 15 mn, l'humidité du riz descend à 20%.

Le riz est alors usiné par passage successif dans 3 cônes d'usinage, qui génèrent entre 8 et 9,5% de farine basse et 6% de brisures.

Il est ensuite acheminé vers un tapis vibrant chauffé par des lampes infrarouges. La température des grains atteint 80°C en 20 secondes. L'humidité des grains est de 18,5%. Ce tapis sert également d'alimentation pour le passage entre les deux rouleaux métalliques qui vont réaliser l'aplatissement des grains. L'écartement des rouleaux est réglé à 0,30 mm, leur vitesse à 45 t/mn. A la sortie, les grains aplatis sont acheminés rapidement vers les colonnes de séchage où leur humidité est ramenée à 12,5%.

Le riz ainsi traité soumis au test à l'alcali présente 99% de grains complètement translucides, c'est-à-dire complètement gélatinisés.

Sa densité est égale à 93% de la densité du même riz usiné mais non traité. 6% des grains présentent des fissures visibles à l'oeil nu. Le taux de brisures est de 6%, identique à celui déterminé après l'usinage. L'épaisseur moyenne des grains est 1,1 mm soit une diminution de 25% par rapport à l'épaisseur des grains traités selon l'exemple 2.

Ce riz cuit pendant 3 mn à l'eau bouillante et, refroidi pendant 15 mn selon le protocole décrit ci-dessus présente les caractéristiques de texture suivantes mesurées au viscoélastographe :

$$Fmoy = 60,9 - \text{écart-type sur 6 mesures} = 2,1$$

Exemple comparatif 3

1 kg de cargo Thaï-Bonnet est étuvé et refroidi selon le procédé décrit dans l'exemple 4. Les grains sont ensuite directement aplatis à température ambiante sans réchauffage préalable. A la sortie de l'aplatissement, on observe 48% de grains fissurés et 17% de brisures. Il y a seulement 23% de grains intacts et entiers.

## Revendications

1. Procédé d'étuvage du riz paddy ou du riz cargo qui consiste à le tremper dans de l'eau à une température inférieure à 70°C dans des conditions et pendant une durée telles que l'on obtienne, après égouttage ou essorage, du riz trempé ayant une teneur pondérale en humidité supérieure à 31 %, puis à effectuer une gélatinisation du riz trempé en le portant à une température supérieure à 130°C, tout en en maintenant l'humidité à une teneur pondérale supérieure à 20 % pendant une durée suffisante pour obtenir du riz gélatinisé à coeur, **caractérisé en ce qu'**il consiste à effectuer la gélatinisation en faisant passer le riz trempé en continue dans une enceinte de manière à limiter, par l'équilibre qui s'instaure dans l'enceinte entre la teneur en humidité du riz qui subit la gélatinisation et la teneur en humidité de l'atmosphère gazeuse de l'enceinte, la quantité de vapeur qui se dégage du riz pendant la gélatinisation pour maintenir l'humidité pondérale du riz en cours de gélatinisation à une valeur supérieure à 20 % et en chauffant le riz trempé dans l'enceinte essentiellement par conduction de manière à ne pas augmenter sensiblement la teneur pondérale en humidité du riz gélatinisé.

2. Procédé suivant la revendication 1, qui consiste à sécher le riz gélatinisé à une teneur pondérale en humidité de 11 à 13 %.

3. Procédé suivant la revendication 2, **caractérisé en ce qu'**il consiste à usiner le riz séché.

4. Procédé suivant l'une des revendications précédentes, **caractérisé en ce que** la durée de passage du riz trempé dans l'enceinte est comprise entre quatre et dix minutes.

5. Procédé suivant l'une des revendications précédentes, **caractérisé en ce qu'**en régime stationnaire le riz occupe de 5 à 30% du volume de l'enceinte.

6. Procédé suivant l'une des revendications précédentes, **caractérisé en ce qu'**il consiste à déplacer le riz dans l'enceinte en faisant vibrer l'enceinte.

7. Procédé suivant l'une des revendications précédentes, **caractérisé en ce que** la teneur pondérale en humidité du riz gélatinisé reste inférieure à 28 %.

8. Procédé de préparation de riz, **caractérisé en ce qu'**il consiste à l'étuver suivant l'une des revendications 1, 4, 5, 6 ou 7, à le refroidir à la température ambiante (15 à 30°C) tout en maintenant son humidité à plus de 19%, à usiner ! e riz refroidi, à le réchauffer au moins à 75-80°C, puis à aplatir le riz réchauffé, et à le sécher jusqu'à une humidité de 11 à 13%.

9. Lot de grains de riz étuvés et non fissurés, **caractérisé en ce qu'**au moins 90 % et, de préférence, au moins 99 % des grains sont gélatinisés à coeur suivant le test de l'alcali et ont une fermeté mesurée au viscoélastographe Chopin, tel que décrit dans la description, inférieure à 62 après avoir été immergés dans de l'eau bouillante pendant huit minutes.

10. Lot suivant la revendication 9, **caractérisé en ce que** les grains ont une teneur pondérale en amylose par rapport à la matière sèche inférieure à 15 % et ont une fermeté mesurée au viscoélastographe Chopin inférieure à 62 après avoir été immergés dans de l'eau bouillante pendant cinq minutes.

11. Lot suivant la revendication 10, **caractérisé en ce que** les grains cuits, placés dans un récipient hermétiquement fermés et mis au réfrigérateur à 4°C pendant 6 jours ont une fermeté, mesurée au viscoélastographe, au plus égale à 120 % de celle qu'ils ont 15 minutes après la cuisson.

12. Lot suivant la revendication 9, **caractérisé en ce que** les grains ont une teneur pondérale en amylose inférieure à 15 %.

**Claims**

1. A process for parboiling paddy rice or cargo rice, which consists in steeping said rice in water at a temperature lower than 70 °C under such conditions and for such a time that, after draining or spin-drying, steeped rice is obtained having a moisture content by weight greater than 31%, then in carrying out a gelatinisation of the steeped rice by heating it to a temperature higher than 130 °C while maintaining the moisture thereof at a content by weight greater than 20% for a sufficient period to obtain core-gelatinised rice, **characterised in that** said process consists in carrying out gelatinisation by causing the steeped rice to pass continuously into an enclosure so as to limit, by virtue of the equilibrium which is established within the enclosure between the moisture content of the rice which is undergoing gelatinisation and the moisture content of the gaseous atmosphere of the enclosure, the quantity of vapour emitted from the rice during gelatinisation, in order to maintain the moisture content by weight of the rice in the course of gelatinisation at a value greater than 20%, and by heating the steeped rice in the enclosure essentially by conduction so as not to increase the moisture content by weight of the gelatinised rice appreciably.

2. Process according to Claim 1, which comprises drying the gelatinised rice to a moisture content by weight of 11% to 13%.

3. Process according to Claim 2, **characterised in that** it comprises machining the dried rice.

4. Process according to one of the preceding claims, **characterised in that** the duration of passage of the steeped rice in the enclosure amounts to between four and ten minutes.

5. Process according to one of the preceding claims, **characterised in that**, in a steady state, the rice occupies from 5% to 30% of the volume of the enclosure.

6. Process according to one of the preceding claims, **characterised in that** it comprises displacing the rice in the enclosure by causing the enclosure to vibrate.

7. Process according to one of the preceding claims, **characterised in that** the moisture content by weight of the gelatinised rice remains less than 28 %.

8. A process for preparation of rice, **characterised in that** said process consists in parboiling said rice in accordance with one of Claims 1, 4, 5, 6 or 7, in cooling it to ambient temperature (15 °C to 30 °C) while maintaining its moisture content at more than 19%, in machining the cooled rice, in reheating it at least to 75-80 °C, then in flattening the reheated rice and in drying it to a moisture content of 11% to 13%.

9. A batch of parboiled and non-fissured grains of rice, **characterised in that** at least 90%, and preferably at least 99%, of the grains are core-gelatinised according to the alkali test and have a firmness, measured in the Chopin viscoelastograph as described in the description, lower than 62 after being immersed in boiling water for eight minutes.

10. Batch according to Claim 9, **characterised in that** the grains have an amylose content by weight lower than 15% relative to dry matter and have a firmness, measured in the Chopin viscoelastograph, lower than 62 after being immersed in boiling water for five minutes.

11. Batch according to Claim 10, **characterised in that** the cooked grains, placed in a hermetically sealed receptacle and put in the refrigerator at 4 °C for 6 days, have a firmness, measured in the viscoelastograph, at most equal to 120% of that which they have 15 minutes after cooking.

12. Batch according to Claim 9, **characterised in that** the grains have an amylose content by weight lower than 15%.

**Patentansprüche**

1. Verfahren zur Herstellung von Parboiled Paddy- oder Cargo-Reis, umfassend die Einweichung des Reises in Wasser mit einer Temperatur von weniger als 70°C unter Bedingungen und mit einer Dauer, damit nach dem Abtropfen oder dem Schleudern ein eingeweichter Reis mit einem Feuchtigkeitsgehalt von über 31 Gewichtsprozent erhalten wird, dann die Durchführung einer Gelatinierung des eingeweichten Reises, indem dieser auf eine Temperatur von mehr als 130°C erhitzt wird, wobei die Feuchtigkeit ausreichend lange bei einem Gehalt von mehr als 20 Gewichtsprozent beibehalten wird, um durchgehend verkleisterten Reis zu erhalten, **dadurch gekennzeichnet, dass** es darin besteht, die Gelatinierung durchzuführen, indem der eingeweichte Reis kontinuierlich durch ein Gehäuse geführt wird, um durch das Gleichgewicht, das sich im Gehäuse zwischen dem Feuchtigkeitsgehalt des Reises, der der Gelatinierung unterzogen wird, und dem Feuchtigkeitsgehalt der gasförmigen Atmosphäre im Gehäuse einstellt, die Dampfmenge zu begrenzen, die der Reis während der Gelatinierung freisetzt, um die Feuchtigkeit des Reises im Laufe der Gelatinierung auf einem Wert über 20 Gewichtsprozent zu halten und indem der eingeweichte Reis im Gehäuse im Wesentlichen durch Wärmeleitung erhitzt wird, sodass der Gewichtsfeuchtigkeitsgehalt des verkleisterten Reises nicht deutlich erhöht wird.

2. Verfahren nach Anspruch 1, umfassend das Trocknen des verkleisterten Reises auf einen Feuchtigkeitsgehalt von 11 bis 13 Gewichtsprozent.

3. Verfahren nach Anspruch 2, **dadurch gekennzeichnet, dass** es die Verarbeitung des getrockneten Reises umfasst.

4. Verfahren nach einem der vorhergehenden Ansprüche, **dadurch gekennzeichnet, dass** die Dauer des Durchlaufs des eingeweichten Reises durch das Gehäuse zwischen vier und zehn Minuten beträgt.

5. Verfahren nach einem der vorhergehenden Ansprüche, **dadurch gekennzeichnet, dass** in ruhendem Zustand der Reis zwischen 5 und 30 % des Volumens des Gehäuses einnimmt.

6. Verfahren nach einem der vorhergehenden Ansprüche, **dadurch gekennzeichnet, dass** es darin besteht, den Reis im Gehäuse zu bewegen, indem das Gehäuse zum Vibrieren gebracht wird.

7. Verfahren nach einem der vorhergehenden Ansprüche, **dadurch gekennzeichnet, dass** der Feuchtigkeitsgehalt des verkleisterten Reises unter 28 Gewichtsprozent bleibt.

8. Verfahren zur Zubereitung von Reis, **dadurch gekennzeichnet, dass** es darin besteht, daraus nach einem der Ansprüche 1, 4, 5, 6 oder 7 Parboiled-Reis herzustellen, ihn auf Raumtemperatur abzukühlen (15 bis 30°C) und dabei seine Feuchtigkeit bei mehr als 19 % zu belassen, den abgekühlten Reis zu verarbeiten, ihn auf mindestens 75-80°C zu erhitzen, dann den erhitzten Reis abzuplatten und ihn bis zu einer Feuchtigkeit von 11 bis 13 % zu trocknen.

9. Charge von Parboiled und nicht rissigen Reiskörnern, **dadurch gekennzeichnet, dass** mindestens 90 % und vorzugsweise mindestens 99 % der Körner gemäß dem Alkalitest durchgehend verkleistert sind und eine im Chopin-Viskoelastograhpen gemessene Festigkeit aufweisen, wie in der Beschreibung erläutert, die weniger als 62 beträgt, nachdem sie acht Minuten lang in sprudelndes Wasser getaucht wurden.

10. Charge nach Anspruch 9, **dadurch gekennzeichnet, dass** die Körner einen Amylosegehalt im Verhältnis zur Trockenmasse von weniger als 15 Gewichtsprozent sowie eine im Chopin-Viskoelastograhpen gemessene Festigkeit aufweisen, die weniger als 62 beträgt, nachdem sie fünf Minuten lang in sprudelndes Wasser getaucht wurden

11. Charge nach Anspruch 10, **dadurch gekennzeichnet, dass** die gekochten Körner, die in ein hermetisch geschlossenes Gehäuse gegeben und bei 4°C 6 Tage lang in den Kühlschrank gestellt werden, eine im Viskoelastographen gemessene Festigkeit aufweisen, die höchstens 120 % derjenigen entspricht, die sie 15 Minuten nach dem Kochen aufweisen.

12. Charge nach Anspruch 9, **dadurch gekennzeichnet, dass** die Körner einen Amylosegehalt von weniger als 15 Gewichtsprozent aufweisen.

FIG. 1

EP 1 085 823 B1

FIG. 2

FIG. 3